(19) Europäisches Patentamt / European Patent Office / Office européen des brevets

(11) **EP 3 310 727 B1**

(12) **FASCICULE DE BREVET EUROPEEN**

(45) Date de publication et mention de la délivrance du brevet:
**21.12.2022   Bulletin 2022/51**

(21) Numéro de dépôt: **16728966.9**

(22) Date de dépôt: **14.06.2016**

(51) Classification Internationale des Brevets (IPC):
*C03C 3/087* (2006.01)    *C03C 4/00* (2006.01)
*C03C 4/02* (2006.01)    *C03C 17/36* (2006.01)

(52) Classification Coopérative des Brevets (CPC):
**C03C 3/087; C03C 4/0092; C03C 4/02;
C03C 17/36; C03C 17/3626; C03C 17/3639;
C03C 17/3642; C03C 17/3644; C03C 17/3652;
C03C 17/366; C03C 17/3681**

(86) Numéro de dépôt international:
**PCT/EP2016/063636**

(87) Numéro de publication internationale:
**WO 2016/202801 (22.12.2016 Gazette 2016/51)**

(54) **SUBSTRAT REVÊTU POUR CONTRÔLE SOLAIRE**

BESCHICHTETES SUBSTRAT FÜR SONNENSCHUTZ

COATED SUBSTRATE FOR SOLAR CONTROL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **19.06.2015   EP 15172972**

(43) Date de publication de la demande:
**25.04.2018   Bulletin 2018/17**

(73) Titulaire: **AGC Glass Europe
1348 Louvain-La-Neuve (BE)**

(72) Inventeurs:
• **LAMBRICHT, Thomas
1360 Perwez (BE)**
• **DEPAUW, Jean-Michel
1083 Bruxelles (BE)**
• **MARENNE, Ingrid
5380 Forville (BE)**
• **BOLAND, François
5030 Gemboux (BE)**
• **DOGIMONT, Audrey
1495 Sart-Dames-Avelines (BE)**
• **DEGAND, Aline
4300 Bleret (BE)**
• **HEVESI, Kadosa
5000 Namur (BE)**

(74) Mandataire: **AGC Glass Europe
Technovation Centre
Intellectual Property Department
Rue Louis Blériot 12
6041 Gosselies (BE)**

(56) Documents cités:
WO-A1-2005/115747    WO-A1-2013/131850
WO-A1-2015/011044    WO-A2-2014/191484
US-A- 5 800 933    US-A1- 2006 159 932
US-A1- 2006 292 381    US-A1- 2008 149 902
US-A1- 2012 315 410    US-A1- 2014 347 722
US-B1- 7 005 182

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne des substrats, en particulier des substrats transparents, par exemple en verre, éventuellement colorés, revêtus d'une couche réfléchissant les infrarouges.

De tels substrats revêtus sont utilisés par exemple en tant que vitrages de bâtiments ou de véhicules, dans des structures simples ou multiples.

Dans le présent document, sauf indication contraire, les termes suivants sont utilisés en accord avec les définitions suivantes:

TL = transmission lumineuse = pourcentage du flux lumineux incident transmis par un produit (entre 380 et 780 nm) selon l'illuminant C et un observateur de 2°.

TLv = transmission lumineuse du substrat = pourcentage du flux lumineux incident transmis par le substrat de verre (entre 380 et 780 nm) selon l'illuminant C et un observateur de 2°. Elle est ici définie pour un verre de 4 mm d'épaisseur.

TLc = transmission lumineuse de la couche = pourcentage du flux lumineux incident transmis par un produit constitué de la couche déposée sur un substrat ayant une absorption nulle (entre 380 et 780 nm) selon l'illuminant C et un observateur de 2°.

RL = réflexion lumineuse = pourcentage du flux lumineux incident réfléchi par un produit (entre 380 et 780 nm) selon l'illuminant C et un observateur de 2.

FS = g = facteur solaire = pourcentage du rayonnement énergétique incident qui est d'une part directement transmis par le produit et d'autre part absorbé par celui-ci puis rayonné par sa face opposée à la source d'énergie calculé selon la norme EN410:2011. S = select = sélectivité = le rapport de la transmission lumineuse au facteur solaire.

TIR = transmission infrarouge = pourcentage du rayonnement infrarouge transmis (entre 780 et 2500 nm) par un produit, calculé selon la norme IS09050 : 2003.

$TIR_C$ = transmission infrarouge de la couche = pourcentage du rayonnement infrarouge transmis (entre 780 et 2500 nm) par un produit constitué de la couche déposée sur un substrat ayant une absorption nulle, et calculé selon la norme IS09050 : 2003.

RIR = réflexion infrarouge = pourcentage du rayonnement infrarouge réfléchi (entre 780 et 2500 nm) par un produit, calculé selon la norme IS09050 : 2003.

RIRv = réflexion infrarouge du substrat avec un réflecteur idéal = pourcentage du rayonnement infrarouge réfléchi (entre 780 et 2500 nm) pour le substrat de verre portant une couche idéale réfléchissant à 100% dans l'infrarouge. Elle est définie ici pour un substrat de verre de 4 mm d'épaisseur, la couche étant déposée sur la face opposée au rayon incident, et calculée selon la norme IS09050 : 2003. La valeur de RIRv maximale de 100% est atteinte lorsqu'il n'y a aucune absorption dans le verre, et RIRv est d'autant plus faible que l'absorption dans le verre est grande, le long du trajet optique faisant 2*4 mm (aller-retour) = 8 mm.

$RIR_C$ = réflexion infrarouge de la couche = pourcentage du rayonnement infrarouge réfléchi (entre 780 et 2500 nm) par un produit constitué de la couche déposée sur un substrat ayant une absorption nulle, calculé selon la norme IS09050 : 2003.

AIR : absorption infrarouge = pourcentage du rayonnement infrarouge absorbé (entre 780 et 2500 nm) par un produit, calculé selon la norme IS09050 : 2003.

$AIR_C$ = absorption infrarouge de la couche = pourcentage du rayonnement infrarouge absorbé (entre 780 et 2500 nm) par un produit constitué de la couche déposée sur un substrat ayant une absorption nulle, calculé selon la norme ISO9050 : 2003.

Dans certaines circonstances, il est souhaitable que les vitrages de bâtiments ou de véhicules, ne laissent pas passer une proportion trop importante de rayonnement solaire incident total afin de ne pas surchauffer l'intérieur du bâtiment ou de l'habitacle tout en offrant une transmission lumineuse (TL) appropriée de manière à procurer un niveau d'éclairement suffisant à l'intérieur du bâtiment ou de l'habitacle. La transmission du rayonnement solaire incident total peut être exprimée en terme de facteur solaire (FS ou g). Ces exigences quelque peu conflictuelles traduisent la volonté d'obtenir un vitrage présentant une sélectivité (S) élevée. Il est également souhaitable que les vitrages répondent à certains critères esthétiques en terme de réflexion lumineuse (RL) et de couleur en réflexion.

Depuis un certain temps déjà, pour réduire l'apport d'énergie solaire aux bâtiments ou aux véhicules, il est fait usage de verres colorés dans la masse. Les vitrages colorés, en plus d'offrir différentes esthétiques largement appréciées, permettent de diminuer le passage des infrarouges responsables de l'échauffement intérieur (ceux-ci étant principalement absorbés par le verre) tout en laissant passer la lumière visible, et font donc ainsi preuve de sélectivité.

Par la suite, une autre solution proposée fut l'usage de revêtements multicouches de contrôle solaire (aussi parfois appelés revêtements anti-solaires ou de protection solaire) sur des substrats en verre clair, puis extra-clairs. Ces empilages multicouche de contrôle solaire offrent une bonne sélectivité en laissant passer la lumière visible et en réfléchissant les infrarouges. Des exemples de revêtements de contrôle solaire connus comprennent généralement plusieurs couches d'un métal réfléchissant les infrarouges, comme l'argent, chacune d'entre elles étant prise en sandwich entre des couches transparentes et anti-réfléchissantes de matériau diélectrique. La sélectivité de ce type d'empilage est d'autant meilleure que le nombre de couches réfléchissant les infrarouges présent dans le revêtement est élevé, assurant une réflexion des infrarouges accrue. Cependant il s'avère toujours difficile pour ces revêtements de contrôle solaire d'assurer à la fois haute sélectivité, aspect esthétique agréable, couleur en réflexion neutre et stable angulairement et réflexion lumineuse modérée.

Dès lors, on aurait pu croire que combiner ces deux solutions (substrat coloré dans la masse et couche de contrôle solaire) améliorerait d'autant plus la sélectivité d'un vitrage, mais les infrarouges traversant deux fois le verre coloré (une première fois en provenance du soleil vers l'intérieur, une seconde fois après réflexion sur la couche de contrôle solaire vers l'extérieur), il s'avère que ce dernier absorbe deux fois plus d'infrarouges, dont il réémet une partie vers l'intérieur, et en outre s'échauffe de façon dangereuse jusqu'à même parfois se briser. Une solution est alors de tremper le verre pour qu'il résiste à la casse thermique, mais il s'agit là d'une étape supplémentaire coûteuse et contraignante.

Il existe donc toujours un besoin de fournir des vitrages hautement sélectifs, en particulier colorés ou à faible transmission lumineuse, ayant une faible réflexion lumineuse côté verre (c'est-à-dire, une fois monté, vu de l'extérieur du bâtiment/véhicule), une dépendance angulaire de la couleur en réflexion côté verre moindre, et qui ne nécessitent pas d'être trempés pour éviter les casses par échauffement thermique.

Dans d'autres circonstances par contre, il peut être souhaitable de fonctionner avec des vitrages isolants dits "à basse émissivité", c'est à dire des vitrages qui présentent la propriété de réfléchir les rayonnements infrarouges émis par exemple par l'intérieur des habitations, limitant par conséquent les déperditions de chaleur, et de laisser passer une partie de l'énergie solaire pour fournir un apport énergétique gratuit venant du soleil vers l'intérieur du bâtiment. Ici aussi, disposer d'une transmission lumineuse aussi élevée que possible est préférable. Les deux exigences de faible émissivité et de forte transmission conduisant normalement à des solutions opposées en terme de structure, il est dans ce cas-ci également nécessaire de procéder à des compromis difficiles à établir.

Pour offrir des vitrages bas-émissifs, la pratique la plus usuelle est de disposer de systèmes de couches minces comportant une ou plusieurs couches capables de réfléchir les rayonnements infrarouges. Des exemples de revêtements à basse émissivité connus comprennent généralement une, voire plusieurs couche(s) d'un métal réfléchissant les infrarouges, comme l'argent, prise(s) en sandwich entre des couches transparentes et anti-réfléchissantes de matériau diélectrique.

Dans ces cas-là aussi, l'usage d'un substrat coloré peut être envisagé, avec le même inconvénient que l'absorption accrue peut induire une surchauffe et qu'il est parfois nécessaire de passer par une étape de trempe pour que le verre résiste à la casse.

Le document US20120315410A1 décrit un vitrage isolant ayant une couleur gris neutre et un coefficient de gain de chaleur solaire inférieur à 0,40, qui comprend une feuille de verre clair espacée d'une feuille de verre revêtue. La feuille de verre revêtue comprend un substrat de verre coloré ayant un revêtement réfléchissant l'infrarouge solaire. La composition du substrat revêtu comprend une partie de verre de base et une partie de colorant de verre, la partie de colorant de verre comprenant du fer total dans la gamme de 0,04 à moins de 0,28 % en poids ; CoO dans la gamme de 32 à 90 ppm, et Se dans la plage de plus de 0 à moins de 5,5 ppm.

Il existe donc toujours aussi un besoin de fournir des vitrages à basse émissivité, en particulier colorés, augmentant l'apport d'énergie gratuite, ayant une faible réflexion lumineuse côté verre (c'est-à-dire, une fois monté, vu de l'extérieur du bâtiment/véhicule), une dépendance angulaire de la couleur en réflexion côté verre moindre, et qui ne nécessitent pas d'être trempés pour éviter les casses par échauffement thermique.

On a découvert que ces combinaisons de propriétés optiques requises peuvent être réalisées, et d'autres avantages peuvent être obtenus par un substrat revêtu, selon la revendication 1 de la présente invention, les revendications dépendantes présentant des modes de réalisation préférés.

La présente invention a en particulier pour objet un substrat transparent revêtu d'une couche réfléchissant les infrarouges, caractérisé en ce que le substrat est un verre caractérisé par une réflexion infrarouge RIRv telle que RIRv $\geq 1.087 * TLv$ et en ce que la couche réfléchissant les infrarouges est caractérisée par une transmission lumineuse TLc telle que TLc $\geq 1.3 * TIRc$.

Ainsi la solution apportée par la présente invention est pour le moins contre-intuitive, car elle démontre qu'il est nécessaire d'associer un revêtement sélectif à un verre qui, lui, est non-sélectif, pour donner un vitrage à sélectivité améliorée ou à tout le moins suffisante pour les applications voulues. En effet, on a trouvé que, classiquement, pour des verres sélectifs, une diminution de la transmission lumineuse (par choix esthétique, pour contrôle solaire ou pour toute autre raison) est invariablement liée à une diminution drastique de la $RIR_V$. A l'inverse, les substrats selon l'invention permettent d'atteindre des transmissions lumineuses plus faibles tout en conservant une réflexion aux infrarouges très intéressante. En outre, on a trouvé que toutes les couches réfléchissant les infrarouges n'étaient pas aussi performantes pour atteindre les buts de l'invention et que des couches bloquant les infrarouges principalement par réflexion, plus que par absorption, étaient nécessaires.

Ainsi donc, les substrats selon l'invention, combinés à un revêtement réfléchissant les infrarouges selon l'invention, peuvent offrir des vitrages simples ou multiples présentant un ou plusieurs des avantages suivants:

- Avec un revêtement hautement sélectif,

  - une haute sélectivité même lorsque le vitrage comprend un substrat en verre de faible transmission lumineuse,
  - une sélectivité améliorée par rapport au même revêtement déposé sur un verre de même transmission lumineuse de l'art antérieur ayant une réflexion infrarouge RIRv telle que RIRv < 1.087 * TLv,
  - une diminution de l'énergie transmise vers l'intérieur du bâtiment ou du véhicule (diminution du facteur solaire), et donc un échauffement moindre de ceux-ci,

- Avec un revêtement bas émissif,

  - une augmentation de l'énergie transmise vers l'intérieur du bâtiment, et donc un apport accru d'énergie gratuite,

- une limitation de l'échauffement du vitrage (diminution de l'absorption), un risque de casse plus faible et une diminution des besoins en trempe, à facteur solaire équivalent,
- des couleurs et esthétiques variées,
- une réflexion lumineuse côté verre atténuée, et donc un aspect moins réfléchissant vu de l'extérieur du bâtiment ou du véhicule, pour un niveau de transmission lumineuse et/ou une sélectivité donnés,
- une correction possible, grâce au substrat en verre coloré, de la couleur en réflexion côté verre créée par le revêtement, sans impact sur des propriétés comme la sélectivité par exemple,
- une dépendance angulaire de la couleur en réflexion côté verre moindre, et donc un aspect plus homogène de la couleur d'une façade d'un bâtiment ou des vitrages d'un véhicule quel que soit l'emplacement du vitrage au sein de la façade ou l'angle de montage de celui-ci dans le véhicule, et ce, sans impact sur des propriétés telle que la sélectivité.

Ces avantages sont d'autant plus intéressants pour des substrats en verre épais, pour lesquels, précédemment, l'absorption et l'énergie réémise vers l'intérieur du bâtiment ou du véhicule étaient d'autant plus grandes qu'ils étaient épais. Ils le sont également pour des situations où le soleil est très haut dans le ciel et où le trajet de ses rayons à travers un vitrage en position relativement verticale est plus long.

De façon préférée le substrat selon l'invention est un verre caractérisé par une réflexion infrarouge RIRv telle que RIRv $\geq$ 1.087 * TLv + 5, plus préférentiellement telle que RIRv $\geq$ 1.087 * TLv + 10, et plus préférentiellement encore telle que RIRv $\geq$ 1.087 * TLv + 15.

Alternativement, le substrat selon l'invention est un verre caractérisé par une réflexion infrarouge RIRv telle que RIRv $\geq$ 1.141 * TLv, plus préférentiellement telle que RIRv $\geq$ 1.196 * TLv, et plus préférentiellement encore telle que RIRv $\geq$ 1.250 * TLv.

Alternativement encore, le substrat selon l'invention est un verre caractérisé par une réflexion infrarouge RIRv telle que RIRv $\geq$ 1.033 * TLv + 5 ou telle que RIRv $\geq$ 1.033 * TLv + 10 ou telle que RIRv $\geq$ 1.033 * TLv + 15, alternativement telle que RIRv $\geq$ 0.978 * TLv + 10 ou telle que RIRv $\geq$ 0.978 * TLv + 15 ou telle que RIRv $\geq$ 0.978 * TLv + 20, ou de façon alternative encore telle que RIRv $\geq$ 0.924 * TLv + 15 ou telle que RIRv $\geq$ 0.924 * TLv + 20 ou telle que RIRv $\geq$ 0.870 * TLv + 20.

Avantageusement le substrat selon l'invention est un verre caractérisé par une transmission lumineuse TLv inférieure à 91%, 90%, 89%, 88%, 85%, 80%, 75%, 70% ou 50%. Avantageusement le substrat selon l'invention est un verre caractérisé par une réflexion infrarouge RIRv supérieure à 50%, 75%, 80%, 85%, 90%, 95%, 97%, 98% ou 99%. Les choix de TLv et RIRv au sein du domaine défini par l'invention varient principalement en fonction de la couleur du verre et sont liés à l'esthétique et aux propriétés énergétiques souhaitées pour le vitrage final.

Selon un mode alternatif avantageux, le substrat selon l'invention est un verre caractérisé par une réflexion infrarouge RIRv telle que RIRv $\geq$ 0.510 * TLv + 53 ou telle que RIRv $\geq$ 0.490 * TLv + 55, plus préférentiellement telle que RIRv $\geq$ 0.435 * TLv + 60 ou telle que RIRv $\geq$ 0.380 * TLv + 65, et plus préférentiellement encore telle que RIRv $\geq$ 0.326 * TLv + 70.

De préférence, un substrat clair selon l'invention est un verre caractérisé par TLv > 85% et $RIR_V$ > 98%, ou par TLv > 87% et $RIR_V$ > 98.5%, ou encore par TLv > 88% et $RIR_V$ > 99%.

De façon préférée, un substrat coloré selon l'invention est un verre caractérisé par TLv < 80% et RIRv > 87%, ou par TLv < 70% et RIRv > 80%, ou par TLv < 50% et RIRv > 60%, ou encore par TLv < 30% et RIRv > 40%, et ce, du plus clair au plus foncé.

Le substrat de verre selon l'invention est fait de verre pouvant appartenir à diverses catégories. Le verre peut ainsi être un verre de type silico-sodo-calcique, alumino-silicate, boro-silicate,... De manière préférée, la composition de base du verre comprend, en une teneur exprimée en pourcentages en poids total de verre :

| | |
|---|---|
| SiO$_2$ | 55 - 85% |
| Al$_2$O$_3$ | 0 - 30% |
| B$_2$O$_3$ | 0 - 20% |
| Na$_2$O | 0 - 25% |
| CaO | 0 - 20% |
| MgO | 0 - 15% |
| K$_2$O | 0 - 20% |
| BaO | 0 - 20%. |

De manière toute préférée, la composition de base du verre comprend, en une teneur exprimée en pourcentages en poids total de verre :

| | |
|---|---|
| SiO$_2$ | 55 - 78% |
| Al$_2$O$_3$ | 0 - 18% |
| B$_2$O$_3$ | 0 - 18% |
| Na$_2$O | 0 - 20% |
| CaO | 0 - 15% |
| MgO | 0 - 10% |
| K$_2$O | 0 - 10% |
| BaO | 0 - 5% |

De manière la plus préférée et pour des raisons de coûts plus faibles de production, le substrat de verre selon l'invention est fait de verre silico-sodo-calcique. Avantageusement, selon ce mode de réalisation, la composition de base du verre comprend, en une teneur exprimée en pourcentages en poids total de verre :

| | |
|---|---|
| SiO$_2$ | 60 - 75% |
| Al$_2$O$_3$ | 0 - 6% |
| B$_2$O$_3$ | 0 - 4% |
| CaO | 0 - 15% |
| MgO | 0 - 10% |
| Na$_2$O | 5 - 20% |
| K2O | 0 - 10% |
| BaO | 0 - 5%. |

En plus de sa composition de base, le verre peut comprendre d'autres composants, de nature et de quantité adaptées en fonction de l'effet recherché.

Une solution proposée dans l'invention pour obtenir un verre avec une réflexion dans les infrarouges RIR$_v$ très élevée consiste à utiliser dans la composition du verre du chrome, dans une gamme de teneurs spécifiques.

Ainsi, selon un premier mode de réalisation de l'invention, le verre a avantageusement une composition qui comprend, en une teneur exprimée en pourcentages en poids total de verre:

| | |
|---|---|
| Fer total (exprimé sous forme de Fe$_2$O$_3$) | 0,002 - 0,06% |
| Cr$_2$O$_3$ | 0,0001 - 0,06 % |

De telles compositions de verre combinant un bas taux de fer et du chrome ont montré des performances particulièrement bonnes en terme de réflexion infrarouge RIR$_v$ et montrent une haute transparence dans le visible et une teinte très peu marquée, proche d'un verre dit « extra-clair ». Ces compositions sont décrites dans les demandes internationales WO2014128016A1, WO2014180679A1, WO2015011040A1, WO2015011041A1, WO2015011042A1, WO2015011043A1 et WO2015011044A1. Selon ce premier mode de réalisation particulier, la composition comprend préférentiellement une teneur en chrome (exprimée sous forme de Cr$_2$O$_3$) allant de 0,002 à 0,06 % en poids par rapport au poids total du verre. De telles teneurs en chrome permettent d'améliorer encore la réflexion infrarouge RIR$_v$.

Selon un deuxième mode de réalisation de l'invention, le verre a une composition qui comprend, en une teneur exprimée en pourcentages en poids total de verre :

| | |
|---|---|
| Fer total (exprimé sous forme de $Fe_2O_3$) | 0,002 - 0,06% |
| $Cr_2O_3$ | 0,0015 - 1 % |
| Co | 0,0001 - 1%. |

De telles compositions de verre à base de chrome et de cobalt ont montré des performances particulièrement bonnes en terme de réflexion infrarouge $RIR_v$, tout en offrant des possibilités intéressantes en terme d'esthétique/couleur (de la neutralité bleutée à une coloration intense voire jusqu'à l'opacité). De telles compositions sont décrites dans la demande de brevet européen n°13 198 454.4.

Selon un troisième mode de réalisation de l'invention, le verre a une composition qui comprend, en une teneur exprimée en pourcentages en poids total de verre :

| | |
|---|---|
| Fer total (exprimé sous forme de $Fe_2O_3$) | 0,02 - 1% |
| $Cr_2O_3$ | 0,002 - 0,5% |
| Co | 0,0001 - 0,5% |

De préférence, selon ce mode de réalisation, la composition comprend : 0.06% < Fer total ≤ 1%.

De telles compositions à base de chrome et de cobalt permettent d'obtenir des feuilles de verre colorées dans la gamme bleu-vert, comparables en terme de couleurs et de transmission lumineuse aux verres bleus et verts proposés sur le marché, mais avec des performances particulièrement bonnes en terme de réflexion infrarouge. De telles compositions sont décrites dans la demande de brevet européen EP15172780.7.

Selon un quatrième mode de réalisation de l'invention, la au moins première feuille de verre externe a une composition qui comprend, en une teneur exprimée en pourcentages en poids total de verre :

| | |
|---|---|
| Fer total (exprimé sous forme de $Fe_2O_3$) | 0,002 - 1% |
| $Cr_2O_3$ | 0,001 - 0,5% |
| Co | 0,0001 - 0,5% |
| Se | 0,0003 - 0,5% |

De telles compositions de verre à base de chrome, de cobalt et de sélénium ont montrés des performances particulièrement bonnes en terme de réflexion infrarouge, tout en offrant des possibilités intéressantes en terme d'esthétique/couleur (de la neutralité grise à une coloration légère à intense dans la gamme gris-bronze). De telles compositions sont décrites dans la demande de brevet européen EP15172779.9.

Alternativement au chrome, il est également proposé hors invention, d'autres solutions utilisant un ou plusieurs composants dans des teneurs spécifiques, pour obtenir un verre avec une réflexion dans les infrarouges $RIR_v$ très élevée.

Selon un premier mode de réalisation alternatif hors invention, le verre a une composition qui comprend, en une teneur exprimée en pourcentages en poids total de verre :

| | |
|---|---|
| Fer total (exprimé sous forme de $Fe_2O_3$) | 0,002 - 0,06% |
| $CeO_2$ | 0,001 - 1%. |

De telles compositions sont décrites dans la demande de brevet européen n°13 193 345.9.

Selon un autre mode de réalisation alternatif hors invention, le verre a une composition qui comprend, en une teneur exprimée en pourcentages en poids total de verre :

| | |
|---|---|
| Fer total (exprimé sous forme de $Fe_2O_3$) | 0,002 - 0,06% ; |

et un des composants suivants :

- le manganèse (exprimé sous forme de MnO), en une teneur allant de 0,01 à 1% en poids ;
- l'antimoine (exprimé sous forme de $Sb_2O_3$), en une teneur allant de 0,01 à 1% en poids ;
- l'arsenic (exprimé sous forme de $As_2O_3$), en une teneur allant de 0,01 à 1% en poids,
  ou

- le cuivre (exprimé sous forme de CuO), en une teneur allant de 0,0002 à 0,1% en poids.

De telles compositions sont décrites dans la demande de brevet européen n°14 167 942.3.

Selon encore un autre mode de réalisation alternatif hors invention, le verre a une composition qui comprend, en une teneur exprimée en pourcentages en poids total de verre :

Fer total (exprimé sous forme de $Fe_2O_3$)    0,002 - 0,04% ;

et au moins deux composants parmi le chrome, le sélénium, le cuivre, le cérium, le manganèse et l'antimoine; le chrome (exprimé sous forme de $Cr_2O_3$) étant en une teneur maximale de 0,02% en poids; le sélénium (exprimé sous forme de Se) étant en une teneur maximale de 0,08% en poids; le cuivre (exprimé sous forme de CuO) étant en une teneur maximale de 0,04% en poids; le cérium (exprimé sous forme de $CeO_2$) étant en une teneur maximale de 0,8% en poids; le manganèse (exprimé sous forme de MnO) étant en une teneur maximale de 1,6% en poids; l'antimoine (exprimé sous forme de $Sb_2O_3$) étant en une teneur maximale de 0,8% en poids ; ladite composition répondant à la formule :

$$A \leq [\ 10{,}02*(Cr_2O_3/Fe_2O_3) + 4*(Se/Fe_2O_3) + 2{,}73*(CuO/Fe_2O_3) + 0{,}7*(CeO_2/Fe_2O_3) +$$

$$0{,}23*(MnO/Fe_2O_3) + 0{,}11*(Sb_2O_3/Fe_2O_3)\ ]\ ;\ \textbf{A}\ \text{étant égal à 0,30.}$$

De telles compositions sont décrites dans la demande de brevet européen n°14 177 487.7.

Selon l'invention, la composition du substrat de verre présente un rédox inférieur à 10%, ou encore inférieur à 5% voire même inférieur à 3%. Le degré d'oxydation d'un verre est donné par son rédox, défini ici comme le rapport en poids d'atome de $Fe^{2+}$ par rapport au poids total des atomes de fer présents dans le verre, $Fe^{2+}$/Fe total. De manière équivalente, le rédox peut également être calculé en exprimant les poids de fer ferreux ($Fe^{2+}$) et de fer total sous forme $Fe_2O_3$. Alternativement, le rédox est parfois exprimé comme le rapport en poids du fer ferreux ($Fe^{2+}$) exprimé sous forme FeO et du fer total exprimé sous forme $Fe_2O_3$. Dans ce cas, la relation suivante permet de passer d'une expression à l'autre :

$$\frac{Fe^{2+}\ sous\ forme\ Fe}{Fe_{Total}\ sous\ forme\ Fe} = \frac{Fe^{2+}\ sous\ forme\ Fe_2O_3}{Fe_{Total}\ sous\ forme\ Fe_2O_3} = 1.1113 * \frac{Fe^{2+}\ sous\ forme\ FeO}{Fe_{Total}\ sous\ forme\ Fe_2O_3}$$

La couche réfléchissant les infrarouges selon l'invention peut de préférence être caractérisée par une transmission lumineuse TLc telle que TLc ≥ 1.35 * TIRc, TLc ≥ 1.4 * TIRc, ou TLc ≥ 1.5 * TIRc, de façon plus préférée telle que TLc ≥ 1.75 * TIRc, TLc ≥ 1.9 * TIRc, ou TLc ≥ 1.95 * TIRc, et plus préférentiellement encore TLc ≥ 2 * TIR$_C$.

En outre, la couche réfléchissant les infrarouges peut présenter certaines caractéristiques avantageuses selon le type d'applications recherchées et/ou d'effets voulus.

Pour des applications basses émissives, la couche peut avantageusement se caractériser par une réflexion infrarouge RIR$_C$ de valeur comprise entre ou égale à 0.5 * (1-AIR$_C$) et 0.86 * (1-AIR$_C$). Dans cette gamme de valeurs, le facteur solaire est plus élevé que lorsqu'un substrat en verre de l'art antérieur de même TLv est utilisé, augmentant ainsi l'apport énergétique gratuit venant du soleil vers l'intérieur du bâtiment par exemple. D'autres avantages selon l'invention sont également présents, comme la limitation de l'échauffement du vitrage, les couleurs et esthétiques variées, la réflexion lumineuse côté verre atténuée, la correction de la couleur en réflexion côté verre, et/ou la dépendance angulaire de la couleur en réflexion côté verre moindre.

Alternativement, pour ces mêmes applications, il peut être avantageux d'utiliser en combinaison avec le verre selon l'invention, une couche ayant une TIR$_C$ inférieure à 50, 40, 35, 30, 25 ou 20 %.

Avantageusement la couche réfléchissant les infrarouges utilisée pour ces applications est un empilage multicouche comprenant n couche(s) fonctionnelle(s) à base d'un matériau réfléchissant le rayonnement infrarouge, avec n = 1 ou 2, et n+1 revêtements diélectriques de telle sorte que chaque couche fonctionnelle est entourée par des revêtements diélectriques.

Pour des applications de contrôle solaire, incluant à la fois une fonction basse émissive et anti-solaire, la couche peut avantageusement se caractériser par une réflexion infrarouge RIR$_C$ de valeur supérieure à 0.86 * (1-AIR$_C$) et inférieure ou égale à 0.97 * (1-AIR$_C$). Dans cette gamme de valeurs, le facteur solaire reste proche et légèrement supérieur à celui obtenu lorsqu'un substrat en verre de l'art antérieur de même TLv est utilisé, n'apportant donc pas d'avantage particulier à cette caractéristique. Cependant d'autres avantages selon l'invention restent présents, comme la limitation de l'échauffement du vitrage, les couleurs et esthétiques variées, la réflexion lumineuse côté verre atténuée, la correction de la couleur en réflexion côté verre, et/ou la dépendance angulaire de la couleur en réflexion côté verre moindre. De façon préférée, la couche peut avantageusement se caractériser par une réflexion infrarouge $RIR_C$ comprise entre une $RIR_C$ telle que $RIR_C \geq 0.90 * (1-AIR_C)$, ou $RIR_C \geq 0.95 * (1-AIR_C)$, ou encore $RIR_C \geq 0.96 * (1-AIR_C)$, et une $RIR_C$ telle que $RIR_C \leq 0.97 * (1-AIR_C)$.

Alternativement, pour ces mêmes applications, il peut être avantageux d'utiliser en combinaison avec le verre selon l'invention, une couche ayant une $TIR_C$ inférieure à 15, 10, 7.5, 5 ou 3 %.

Avantageusement la couche réfléchissant les infrarouges utilisée pour ces applications est un empilage multicouche comprenant n couche(s) fonctionnelle(s) à base d'un matériau réfléchissant le rayonnement infrarouge, avec n = 2, et n+1 revêtements diélectriques de telle sorte que chaque couche fonctionnelle est entourée par des revêtements diélectriques.

Pour des applications anti-solaires, la couche peut avantageusement se caractériser par une réflexion infrarouge $RIR_C$ de valeur supérieure à $0.97 * (1-AIR_C)$. Dans cette gamme de valeurs, le facteur solaire est plus bas que lorsqu'un substrat en verre de l'art antérieur de même TLv est utilisé, diminuant ainsi l'énergie transmise vers l'intérieur et augmentant la sélectivité du vitrage. D'autres avantages selon l'invention restent également présents, comme la limitation de l'échauffement du vitrage, les couleurs et esthétiques variées, la réflexion lumineuse côté verre atténuée, la correction de la couleur en réflexion côté verre, et/ou la dépendance angulaire de la couleur en réflexion côté verre moindre. De façon préférée, la couche peut avantageusement se caractériser par une réflexion infrarouge $RIR_C$ telle que $RIR_C \geq 0.98 * (1-AIRc)$, ou $RIR_C \geq 0.99 * (1-AIR_C)$.

Alternativement, pour ces mêmes applications, il peut être avantageux d'utiliser en combinaison avec le verre selon l'invention, une couche ayant une $TIR_C$ inférieure à 2.5, 2, 1.5 ou 1 %. Alternativement encore, il peut être avantageux d'utiliser en combinaison avec le verre selon l'invention, une couche ayant une réflexion à chaque longueur d'onde dans la gamme 780 à 2500 nm, supérieure à 28, 30, 35 ou 40 %.

Avantageusement la couche réfléchissant les infrarouges utilisée pour ces applications est un empilage multicouche comprenant n couche(s) fonctionnelle(s) à base d'un matériau réfléchissant le rayonnement infrarouge, avec n ≥ 3, et n+1 revêtements diélectriques de telle sorte que chaque couche fonctionnelle est entourée par des revêtements diélectriques.

Les couches fonctionnelles faisant partie des couches réfléchissant les infrarouges sont avantageusement formées à partir de métal noble. Elles peuvent être à base d'argent, d'or, de palladium, de platine ou leur mélange ou alliage, mais aussi à base de cuivre ou d'aluminium, seul, en alliage ou en alliage avec un ou plusieurs des métaux nobles. De préférence, toutes les couches fonctionnelles sont à base d'argent. C'est un métal noble qui présente une très grande efficacité de réflexion du rayonnement infrarouge. Il est mis en œuvre aisément dans un dispositif magnétron et son prix de revient n'est pas prohibitif, surtout eu égard à son efficacité. Avantageusement, l'argent est dopé avec quelques pourcents de palladium, d'aluminium ou du cuivre, à raison par exemple de 1 à 10%, ou on peut utiliser un alliage d'argent.

Les revêtements diélectriques, transparents, faisant partie des couches réfléchissant les infrarouges, sont bien connus dans le domaine des couches déposées par pulvérisation cathodique. Les matières adéquates sont nombreuses et il n'est pas utile d'en faire la liste complète ici. Ce sont en général des oxydes, oxy-nitrures ou nitrures métalliques. Parmi les plus courantes, on peut citer à titre d'exemple $SiO_2$, $TiO_2$, $SnO_2$, ZnO, ZnAlOx, $Si_3N_4$, AIN, $Al_2O_3$, $ZrO_2$, $Nb_2O_5$, $YO_x$ $TiZrYO_x$, $TiNbO_x$, $HfO_x$, $MgO_x$, $TaO_x$, $CrO_x$ et $Bi_2O_3$, et leurs mélanges. On peut également citer les matériaux suivants : AZO, ZTO, GZO, $NiCrO_x$, TXO, ZSO, TZO, TNO, TZSO, TZAO et TZAYO. L'expression AZO se rapporte à un oxyde de zinc dopé avec de l'aluminium ou à un oxyde mixte de zinc et d'aluminium, obtenu de préférence à partir d'une cible céramique formée par l'oxyde à déposer, pulvérisée soit en atmosphère neutre ou légèrement oxydante. De même, les expressions ZTO ou GZO se rapportent respectivement à des oxydes mixtes de titane et de zinc ou de zinc et de gallium, obtenus à partir de cibles céramiques, soit en atmosphère neutre ou légèrement oxydante. L'expression TXO se rapporte à de l'oxyde de titane obtenu à partir d'une cible céramique d'oxyde de titane. L'expression ZSO se rapporte à un oxyde mixte zinc-étain obtenu soit à partir d'une cible métallique de l'alliage déposé sous atmosphère oxydante ou à partir d'une cible céramique de l'oxyde correspondant, soit en atmosphère neutre ou légèrement oxydante. Les expressions TZO, TNO, TZSO, TZAO ou TZAYO se rapportent respectivement à des oxydes mixtes titane-zirconium, titane-niobium, titane-zirconium-étain, titane-zirconium-aluminium ou titane-zirconium-aluminium-yttrium, obtenus à partir de cibles céramiques, soit en atmosphère neutre ou légèrement oxydante. Tous ces matériaux cités ci-avant peuvent être utilisés pour former les revêtements diélectriques utilisés dans la présente invention.

De préférence, le revêtement diélectrique disposé sous une ou sous chaque couche fonctionnelle comprend, en contact direct avec la ou les couches fonctionnelles, une couche à base d'un oxyde de zinc, éventuellement dopé par exemple à l'aluminium ou au gallium, ou en alliage avec de l'oxyde d'étain. L'oxyde de zinc peut avoir un effet particulièrement favorable sur la stabilité et la résistance à la corrosion de la couche fonctionnelle, notamment lorsqu'il s'agit d'argent. Il est également favorable à l'amélioration de la conductibilité électrique d'une couche à base d'argent, et donc à l'obtention d'une faible émissivité.

Les différentes couches de l'empilage sont, par exemple, déposées par pulvérisation cathodique sous pression réduite assistée par champ magnétique, dans un dispositif bien connu de type magnétron. La présente invention n'est toutefois pas limitée à ce procédé particulier de dépôt de couche.

Les substrats transparents revêtus selon l'invention peuvent être utilisés en tant que vitrages simples ou assemblés en vitrages multiples tels que des vitrages doubles ou triples dans lesquels la feuille de verre portant la couche réfléchissant les infrarouges est associée à une ou plusieurs autre feuille de verre, pourvue ou non de revêtement, la couche réfléchissant les infrarouges se trouvant au contact de l'espace intérieur entre les feuilles de verre.

Pour des applications de contrôle solaire ou anti-solaire, le substrat revêtu de la couche réfléchissant les infrarouges est de préférence assemblé en vitrage multiple, par exemple en double ou en triple vitrage, de telle sorte que, lorsqu'il est monté sur un bâtiment, le rayonnement solaire frappe d'abord la feuille de verre revêtue du côté dépourvu de couche, puis la couche réfléchissant les infrarouges, puis la seconde feuille de verre, et puis éventuellement la troisième s'il s'agit d'un triple vitrage. La couche réfléchissant les infrarouges se trouve donc, selon la convention généralement utilisée, en position 2. C'est dans cette position que la protection solaire est la plus efficace. Pour des applications basses émissives, la couche réfléchissant les infrarouges peut se trouver, selon la convention généralement utilisée, en position 2 ou 3 d'un double vitrage et/ou encore en position 4 ou 5 d'un triple vitrage.

L'invention s'étend aussi à un vitrage feuilleté comprenant au moins un substrat transparent tel que décrit ci-dessus assemblé à une feuille de matière vitreuse par l'intermédiaire d'une matière plastique adhésive, généralement du PVB. Un tel vitrage peut être utilisé comme vitrage d'un bâtiment ou d'un véhicule automobile. Dans le domaine des vitrages automobiles, les substrats revêtus selon l'invention peuvent être utilisés par exemple en tant que pare-brise mais également pour les autres vitres du véhicule telles les vitres latérales ou lunettes arrières.

A titre d'exemples, des modes de réalisation particuliers de l'invention vont à présent être décrits, en faisant référence aux exemples 1 à 35 selon l'invention et aux exemples comparatifs C1-C35 hors invention.

Les principales caractéristiques des verres utilisés dans les exemples et exemples comparatifs sont données dans la Table Ia. Leurs compositions, outre le $SiO_2$, sont données à la Table Ib en pourcentages poids. La Table II quant à elle décrit des couches réfléchissant les infrarouges selon l'invention, répondant à la relation $TLc \geq 1.3 * TIRc$. Les Tables I et II utilisent les termes tels que définis au début du présent document.

Dans la Table II,

- ZSO5 représente un oxide mixte zinc-étain, dans lequel la proportion zinc-étain est proche de 50-50% en poids ($Zn_2SnO_4$),
- ZnO:Al ou AZO représentent des oxydes de zinc dopé à l'aluminium (dopage entre 0,1 et 6 % en poids d'Al),
- TXO représente un oxyde de titane obtenu à partir d'une cible céramique d'oxyde de titane,
- TiN+C représente une couche de protection trempable formée d'une couche de nitrure de titane recouverte de carbone. Après traitement thermique le carbone est brûlé et la couche de TiN s'oxyde,
- NiCrW représente une couche mixte de tungstène, nickel et chrome comprenant 60% en poids de tungstène et 40% d'un alliage nickel/chrome 80/20,
- SiN représente un nitrure de silicium, pouvant être utilisé pur (>99%) ou dopé (en particulier par Al, le plus souvent à hauteur de 8-10% en poids d'Al),
- TZO représente un oxyde mixte titane-zirconium, dans lequel la proportion titane-zirconium est proche de 65-35% en poids.

**TABLE Ia**

| Type de verre | RIRv (ISO9050) | $TL_{V(C,2)}$ | $a^*$ (D,10) | $b^*$ (D,10) |
|---|---|---|---|---|
| comp-clair | 76.8 | 89.7 | -0.9 | 0.2 |
| comp-extraclair | 95.4 | 91.5 | -0.1 | 0.1 |
| inv-clair | 99.2 | 89.9 | -0.9 | 0.6 |
| | | | | |
| comp-vert | 17.7 | 78.5 | -6.1 | 1.2 |
| inv-vert | 97.1 | 75.5 | -5.4 | 0.4 |
| comp-vert foncé | 11 | 72.7 | -8.3 | 2 |
| inv-vert foncé | 96.8 | 71.1 | -7.3 | 1.4 |
| comp-vert 'privacy' | 5 | 34.3 | -16.6 | 0.4 |
| inv-vert 'privacy' | 91 | 41 | -16.1 | -1.1 |
| | | | | |

(suite)

| Type de verre | RIRv (IS09050) | $TL_{V(C,2)}$ | $a^*$ (D,10) | $b^*$ (D,10) |
|---|---|---|---|---|
| inv-bleu | 96 | 77.2 | -3 | -2.9 |
| comp-bleu foncé | 18.4 | 66.7 | -6.6 | -8.1 |
| inv-bleu foncé | 95.1 | 64.2 | -5.4 | -8.3 |
| comp-bleu 'privacy' | 6.7 | 46.5 | -12.7 | -11.8 |
| inv-bleu 'privacy' | 90.4 | 42 | -10.6 | -12.2 |
| | | | | |
| comp-gris clair | 35.7 | 70.1 | -1.1 | 0 |
| inv-gris clair | 97.1 | 70.1 | 0 | 0 |
| comp-gris | 42.7 | 55.7 | 0.9 | -2.1 |
| inv-gris | 95.2 | 55.9 | -1.4 | -1.9 |
| comp-gris 'privacy' | 7.7 | 17.4 | -1 | -0.1 |
| inv-gris 'privacy' | 87.3 | 17.3 | 1.2 | -0.9 |
| | | | | |
| comp-bronze | 45.9 | 61 | 2.8 | 4.4 |
| inv- bronze | 96.6 | 58 | 2.6 | 4.3 |

**TABLE Ib**

| Type de verre | CaO (%) | K2O (%) | Na2O (%) | Fe2O3 (%) | SO3 (%) | TiO2 (%) | Al2O3 (%) | MgO (%) | ZrO2 (ppm) | MnO (ppm) | BaO (ppm) | Co (ppm) | Se (ppm) | Cr2O3 (ppm) | V2O5 (ppm) | Ni (ppm) |
|---|---|---|---|---|---|---|---|---|---|---|---|---|---|---|---|---|
| comp-clair | 8.700 | 0.130 | 13.830 | 0.085 | 0.260 | 0.045 | 0.880 | 4.320 | 40 | 200 | 40 | | | | | |
| comp-extraclair | 9.090 | 0.024 | 13.930 | 0.011 | 0.230 | 0.017 | 0.721 | 4.320 | 28 | | | 0.25 | | | | |
| inv-clair | 7.910 | 0.018 | 13.830 | 0.009 | 0.341 | <0.016 | 1.338 | 4.460 | 45 | <10 | | 4.000 | | 46 | | |
| comp-vert | 8.990 | 0.148 | 13.650 | 0.595 | 0.186 | 0.049 | 0.803 | 4.080 | 74 | 201 | 38 | | | | | |
| inv-vert | 8.000 | 0.200 | 13.500 | 0.049 | 0.300 | | 1.000 | 4.500 | | | | 29 | | 330 | | |
| comp-vert foncé | 8.440 | 0.143 | 13.880 | 0.832 | 0.153 | 0.048 | 0.931 | 4.150 | 49 | 191 | 46 | | | | 14 | |
| inv-vert foncé | 8.000 | 0.200 | 13.500 | 0.069 | 0.300 | | 1.000 | 4.500 | | | | 36 | | 470 | | |
| comp-vert 'privacy' | 8.330 | 0.157 | 13.700 | 1.552 | 0.136 | 0.048 | 0.928 | 4.020 | 53 | 202 | 49 | 79 | | 214 | 425 | |
| inv-vert 'privacy' | 8.000 | 0.200 | 13.500 | 0.069 | 0.300 | | 1.000 | 4.500 | | | | 128 | | 1370 | | |
| inv-bleu | 8.000 | 0.200 | 13.500 | 0.0086 | 0.352 | | 1.000 | 4.500 | | | | 41 | | 65 | | |
| comp-bleu foncé | 8.490 | 0.109 | 13.700 | 0.481 | 0.093 | 0.050 | 0.868 | 4.190 | 47 | 224 | 49 | 44 | <3 | 24 | | |
| inv-bleu foncé | 8.000 | 0.200 | 13.500 | 0.043 | 0.300 | | 1.000 | 4.500 | | | | 73 | | 287.7 | | |
| comp-bleu 'privacy' | 8.460 | 0.134 | 13.820 | 0.822 | 0.070 | 0.052 | 0.951 | 4.170 | 48 | 230 | 55 | 90 | | 205 | | |
| inv-bleu 'privacy' | 8.000 | 0.200 | 13.500 | 0.042 | 0.300 | | 1.000 | 4.500 | | | | 152 | | 840 | | |
| comp-gris clair | 8.910 | 0.072 | 13.930 | 0.330 | 0.164 | 0.011 | 0.126 | 3.700 | 31 | 39 | <21 | 23 | 7 | <6 | | |
| inv-gris clair | 8.000 | 0.200 | 13.500 | 0.075 | 0.300 | | 1.000 | 4.500 | | | | 36 | 74 | 111 | | |
| comp-gris | 8.800 | 0.219 | 13.770 | 0.346 | 0.308 | 0.031 | 0.865 | 4.180 | 44 | 120 | | 64 | 20 | | | 17 |
| inv-gris | 8.000 | 0.200 | 13.500 | 0.043 | 0.300 | | 1.000 | 4.500 | | | | 69.9 | 200 | 287.8 | | |

| Type de verre | CaO (%) | K2O (%) | Na2O (%) | Fe2O3 (%) | SO3 (%) | TiO2 (%) | Al2O3 (%) | MgO (%) | ZrO2 (ppm) | MnO (ppm) | BaO (ppm) | Co (ppm) | Se (ppm) | Cr2O3 (ppm) | V2O5 (ppm) | Ni (ppm) |
|---|---|---|---|---|---|---|---|---|---|---|---|---|---|---|---|---|
| comp-gris 'privacy' | 8.520 | 0.232 | 13.700 | 0.371 | 0.153 | 0.047 | 1.008 | 4.180 | 50 | 191 | 56 | 15 | | | | |
| inv-gris 'privacy' | 8.000 | 0.200 | 13.500 | 0.067 | 0.300 | | 1.000 | 4.500 | | | | 215 | 560 | 800 | | |
| comp-bronze | 8.880 | 0.122 | 13.540 | 0.313 | 0.250 | 0.037 | 0.670 | 4.240 | 41 | 216 | 52 | 30 | 27 | 33 | | |
| inv-bronze | 8.000 | 0.200 | 13.500 | 0.040 | 0.300 | | 1.000 | 4.500 | | | | 44.9 | 340.8 | 200 | | |

## TABLE II

| | TL$_C$ | TIR$_C$ | RIR$_C$ | AIR$_C$ | | | | | | | | | | | | | | | |
|---|---|---|---|---|---|---|---|---|---|---|---|---|---|---|---|---|---|---|---|
| **A** | TL$_C$ | TIR$_C$ | RIR$_C$ | AIR$_C$ | ZSO5 | ZnO | Ag | Ti | ZnO:Al | ZSO5 | ZnO | Ag | TXO | ZnO:Al | ZSO5 | ZnO | Ag | TXO | ZnO:Al | ZSO5 | TiO2 |
| | 54 | 0.6 | 82.5 | 16.9 | 400 Å | | 150 Å | 70 Å | 700 Å | | | 95 Å | 30 Å | 400 Å | | | 105 Å | 30 Å | 250 Å | | 10Å |
| **B** | TL$_C$ | TIR$_C$ | RIR$_C$ | AIR$_C$ | ZSO5 | ZnO | Ag | Ti | ZnO:Al | ZSO5 | ZnO | Ag | Ti | ZnO:Al | ZSO5 | ZnO | Ag | Ti | ZnO:Al | ZSO5 | TiO2 |
| | 68 | 0.6 | 91.3 | 8.1 | 350 Å | | 120 Å | 25 Å | 680 Å | | | 105 Å | 30 Å | 500 Å | | | 140 Å | 20 Å | 230 Å | | 10Å |
| **C** | TL$_C$ | TIR$_C$ | RIR$_C$ | AIR$_C$ | ZSO5 | ZnO | Ag | Ti | ZnO:Al | ZSO5 | ZnO | Ag | Ti | ZnO:Al | ZSO5 | TiO2 |
| | 56 | 7.2 | 72.9 | 19.9 | 376 Å | | 92 Å | 30 Å | 844 Å | | | 177 Å | 71 Å | 299 Å | | 10 Å |
| **D** | TL$_C$ | TIR$_C$ | RIR$_C$ | AIR$_C$ | ZSO5 | ZnO | Ag | Ti | ZnO:Al | ZSO5 | ZnO | Ag:Pd | Ti | ZnO:Al | ZSO5 | TiN + C |
| | 40 | 3.5 | 79.8 | 16.7 | 390 Å | | 84 Å | 60 Å | 885 Å | | | 260 Å | 60 Å | 240 Å | | 35Å+50Å |
| **E** | TL$_C$ | TIR$_C$ | RIR$_C$ | AIR$_C$ | ZSO5 | ZnO | Ag | Ti | ZnO:Al | ZSO5 | ZnO | Ag | Ti | ZnO:Al | ZSO5 | TiO2 |
| | 45 | 2.8 | 68.0 | 29.2 | 369 Å | | 164 Å | 31 Å | 805 Å | | | 132 Å | 61 Å | 308 Å | | 10Å |
| **F** | TL$_C$ | TIR$_C$ | RIR$_C$ | AIR$_C$ | SiN | NiCr | Ag | NiCr | SiN |
| | 58 | 17.6 | 68.5 | 13.9 | 400 Å | 13 Å | 166 Å | 16 Å | 510 Å |
| **G** | TL$_C$ | TIR$_C$ | RIR$_C$ | AIR$_C$ | TiO2 | ZnO | Ag | AZO | ZSO5 | SiN | TZO |
| | 92 | 41.4 | 52.3 | 6.3 | 250Å | 30 Å | 115Å | 40 Å | 150Å | 210 Å | 40 Å |

Dans tous les tableaux qui suivent, sauf indication contraire, les mesures sont données pour des double-vitrages comprenant depuis l'extérieur un premier verre-substrat revêtu (couche en position 2) de 6 mm d'épaisseur, un espace gazeux de 15 mm empli de 90% d'argon et 10% d'air, et un second verre clair standard de 4 mm d'épaisseur. Les propriétés de transmission lumineuse (TL), réflexion lumineuse (RL), facteur solaire (g), sélectivité (select=TL/g), absorption (Abs), sauf indication contraire, sont données selon la norme EN410:2011, sous illuminant D65, 2°. Les couleurs a*, b* sont données selon le modèle CIE Lab défini en 1976 par la Commission internationale de l'éclairage (CIE), sous illuminant D, 10°. L'absorption totale (Abs tot) est l'absorption énergétique du double-vitrage complet. L'absorption du substrat en verre revêtu de la couche (Abs VR+C) est l'absorption énergétique du verre extérieur du double-vitrage et de la couche qu'il porte.

**Tableau A**

| ex. | Substrat | Couche | TL | g | select | Abs tot |
|-----|----------|--------|------|------|--------|---------|
| C1 | comp-clair | A | 47.5 | 22.7 | 2.09 | 42.9 |
| C1' | comp-extraclair | A | 48.7 | 23.1 | 2.11 | 33.1 |
| 1 | inv-clair | A | 47.5 | 22.4 | 2.12 | 32.4 |
| C2 | comp-vert | A | 37.0 | 17.9 | 2.07 | 76.1 |
| 2 | inv-vert | A | 37.0 | 17.7 | 2.09 | 42.4 |
| C3 | comp-vert foncé | A | 33.9 | 16.5 | 2.06 | 78.9 |
| 3 | inv-vert foncé | A | 33.9 | 16.3 | 2.08 | 45.0 |
| C4 | comp-vert 'privacy' | A | 15.5 | 9.6 | 1.62 | 89.1 |
| 4 | inv-vert 'privacy' | A | 15.5 | 8.9 | 1.75 | 59.2 |
| C5 | comp-bleu foncé | A | 29.2 | 16.2 | 1.81 | 77.5 |
| 5 | inv- bleu foncé | A | 29.2 | 15.8 | 1.85 | 46.0 |
| C6 | comp-bleu 'privacy' | A | 16.0 | 10.7 | 1.50 | 87.4 |
| 6 | inv-bleu 'privacy' | A | 16.0 | 10.2 | 1.56 | 57.3 |
| C7 | comp-gris | A | 23.7 | 13.9 | 1.71 | 72.8 |
| 7 | inv-gris | A | 23.7 | 13.3 | 1.78 | 50.0 |
| C8 | comp-gris 'privacy' | A | 4.3 | 5.8 | 0.74 | 93.4 |
| 8 | inv-gris 'privacy' | A | 4.3 | 5.5 | 0.78 | 65.1 |
| C9 | comp-bronze | A | 24.8 | 13.8 | 1.80 | 73.6 |
| 9 | inv- bronze | A | 24.9 | 13.4 | 1.85 | 49.2 |

**Tableau B**

| ex. | Substrat | Couche | TL | g | select | Abs tot |
|-----|----------|--------|------|------|--------|---------|
| C10 | comp-clair | B | 59.7 | 28.3 | 2.11 | 37.4 |
| C10' | comp-extraclair | B | 61.2 | 29.0 | 2.11 | 27.7 |
| 10 | inv-clair | B | 59.7 | 28.1 | 2.12 | 26.7 |
| C11 | comp-vert | B | 46.4 | 21.8 | 2.13 | 73.5 |
| 11 | inv-vert | B | 46.4 | 21.8 | 2.13 | 35.8 |
| C12 | comp-vert foncé | B | 42.6 | 20.0 | 2.13 | 76.6 |
| 12 | inv-vert foncé | B | 42.6 | 20.0 | 2.12 | 38.5 |
| C13 | comp-vert 'privacy' | B | 19.5 | 11.2 | 1.75 | 87.8 |
| 13 | inv-vert 'privacy' | B | 19.5 | 10.4 | 1.88 | 54.4 |
| C14 | comp-bleu foncé | B | 36.7 | 19.7 | 1.86 | 75.3 |
| 14 | inv- bleu foncé | B | 36.7 | 19.4 | 1.89 | 40.0 |
| C15 | comp-bleu 'privacy' | B | 20.0 | 12.6 | 1.59 | 86.0 |
| 15 | inv-bleu 'privacy' | B | 20.1 | 12.2 | 1.64 | 52.2 |

(suite)

| ex. | Substrat | Couche | TL | g | select | Abs tot |
|---|---|---|---|---|---|---|
| C16 | comp-gris | B | 29.9 | 16.9 | 1.77 | 69.4 |
| 16 | inv-gris | B | 29.8 | 16.3 | 1.83 | 44.0 |
| C17 | comp-gris 'privacy' | B | 5.4 | 6.3 | 0.86 | 92.8 |
| 17 | inv-gris 'privacy' | B | 5.4 | 6.1 | 0.89 | 61.2 |
| C18 | comp-bronze | B | 31.3 | 16.7 | 1.88 | 70.3 |
| 18 | inv- bronze | B | 31.4 | 16.5 | 1.91 | 42.8 |

**Tableau D**

| ex. | Substrat | Couche | TL | RL out | g | select | Abs tot |
|---|---|---|---|---|---|---|---|
| C21 | comp-clair | D | 35.7 | 30.7 | 21.0 | 1.7 | 39.6 |
| 21 | inv-bleu foncé | B | 36.7 | 7.6 | 19.4 | 1.9 | 40.0 |

**Tableau C**

| ex. | Substrat | Couche | transmission | | | réflexion extérieure | | | g | select | Abs VR+C |
| | | | TL (D,2°) | a* (D,10°) | b* (D,10°) | RL out (D,2°) | a* (D,10°) | b* (D,10°) | | | |
|---|---|---|---|---|---|---|---|---|---|---|---|
| C19 | comp-extraclair | A | 48.7 | -7.0 | 3.9 | 18.2 | -4.0 | -13.7 | 23.1 | 2.15 | 32.5 |
| 19 | inv-bleu | B | 48.8 | -8.4 | 0.7 | 9.9 | -3.5 | -8.4 | 23.8 | 2.09 | 32.8 |
| 20 | inv-bleu | A | 38.8 | -9.8 | 0.3 | 13.4 | -4.7 | -14.4 | 19.2 | 2.05 | 39.2 |

**Tableau E**

| ex. | Substrat | Couche | TL | g | select | Abs tot |
|-----|----------|--------|------|------|--------|---------|
| C22 | comp-clair | C | 49.7 | 28.0 | 1.77 | 42.0 |
| 22 | inv-clair | C | 49.8 | 28.5 | 1.75 | 31.0 |
| C23 | comp-vert | C | 41.0 | 21.4 | 1.91 | 71.0 |
| 23 | inv-vert | C | 38.7 | 23.1 | 1.67 | 42.0 |
| C24 | comp-bronze | C | 28.0 | 18.1 | 1.55 | 69.2 |
| 24 | inv-bronze | C | 26.1 | 18.6 | 1.40 | 49.1 |
| C25 | comp-vert | D | 27.6 | 15.5 | 1.78 | 75.5 |
| 25 | inv-vert | D | 27.7 | 17.0 | 1.63 | 41.1 |
| C26 | comp-gris | D | 17.8 | 13.4 | 1.33 | 72.2 |
| 26 | inv-gris | D | 17.7 | 13.6 | 1.31 | 49.3 |
| C27 | comp-clair | E | 40.1 | 21.1 | 1.90 | 51.3 |
| 27 | inv-clair | E | 40.1 | 21.0 | 1.91 | 42.1 |
| C28 | comp-vert foncé | E | 28.6 | 15.0 | 1.91 | 81.5 |
| 28 | inv-vert foncé | E | 28.6 | 15.9 | 1.81 | 53.2 |
| C29 | comp-gris | E | 20.0 | 13.4 | 1.49 | 76.1 |
| 29 | inv-gris | E | 20.0 | 13.3 | 1.50 | 57.5 |
| C30 | comp-vert | F | 42.0 | 23.6 | 1.78 | 67.1 |
| 30 | inv-vert | F | 39.6 | 28.8 | 1.38 | 36.2 |
| C31 | comp-vert foncé | F | 37.5 | 20.4 | 1.84 | 73.3 |
| 31 | inv-vert foncé | F | 36.3 | 27.0 | 1.34 | 39.5 |
| C32 | comp-bleu foncé | F | 33.1 | 21.5 | 1.54 | 70.5 |
| 32 | inv-bleu foncé | F | 31.3 | 26.7 | 1.17 | 40.5 |
| C33 | comp-clair | G | 79.9 | 57.9 | 1.38 | 23.0 |
| 33 | inv-clair | G | 80.0 | 61.7 | 1.30 | 12.5 |
| C34 | comp-vert | G | 65.9 | 37.3 | 1.77 | 58.2 |
| 34 | inv-vert | G | 62.2 | 50.7 | 1.23 | 26.4 |
| C35 | comp-gris | G | 39.6 | 34.1 | 1.16 | 58.6 |
| 35 | inv-gris | G | 40.0 | 42.7 | 0.94 | 36.3 |

Exemples 1 à 18 et exemples comparatifs C1 à C18

Des couches hautement sélectives, conformes à l'invention et répondant en outre à la relation RIR$_C$ > 0.97 * (1-AIR$_C$), ont été combinées avec différents verres, dont certains, non-conformes à l'invention (notés comp-), ont une réflexion infrarouge RIRv inférieure à 1.087 fois leur transmission lumineuse TLv, et d'autres, conformes à l'invention (notés inv-), ont une réflexion infrarouge RIRv supérieure ou égale à 1.087 fois leur transmission lumineuse TLv. Les valeurs simulées de transmission lumineuse, facteur solaire, sélectivité et absorption totale, en double vitrage, sont données dans le Tableau A pour les combinaisons avec la couche A et dans le Tableau B pour les combinaisons avec la couche B.

Afin de pouvoir comparer aisément les propriétés des vitrages selon invention et hors invention à TL équivalente, l'épaisseur du substrat en verre non-conforme à l'invention revêtu de la couche a été adaptée par simulation. Cette approche est valide car les différences de TL initiales étaient minimes.

Ces résultats montrent que l'utilisation combinée d'un verre ayant une réflexion infrarouge telle que RIRv ≥ 1.087 * TLv et d'une couche répondant à la relation TLc ≥ 1.3 * TIRc, ainsi qu'à la relation RIR$_C$ > 0.97 * (1-AIR$_C$), apporte, à TL équivalente, une diminution du facteur solaire et une augmentation de sélectivité, ou à tout le moins un facteur solaire et une sélectivité inchangés, en même temps qu'une absorption très significativement moindre. Ces combinaisons peuvent avantageusement être utilisées pour des applications anti-solaires.

Exemple 19 et exemple comparatif C19

L'exemple 19 et l'exemple comparatif C19 du Tableau C démontrent entre autre l'avantage de la présente invention en terme de réflexion lumineuse côté verre, c'est-à-dire vu de l'extérieur. A noter pour ce tableau: l'absorption 'Abs VR+C' est donnée selon la norme ISO9050:2003.
L'exemple 19 montre que par la combinaison d'un substrat en verre selon l'invention et d'une couche réfléchissant les infrarouges selon l'invention, il est possible d'atteindre des propriétés semblables à des structures déjà connues (C19), mais en évitant une réflexion lumineuse extérieure (RL out) trop forte (~10% au lieu de ˜18%). Cette combinaison propose donc un produit sélectif, à faible réflexion lumineuse et de couleur neutre, ayant une absorption suffisamment basse pour éviter de devoir tremper le verre (limite typique communément admise: ≤40-45%). La production de la couche sur le verre coloré de l'exemple 19 est plus aisée, et donc avantageuse pour le rendement et le coût de production, car la couleur du substrat permet d'atténuer la déviation de couleur de la couche et d'ainsi obtenir une meilleure uniformité de couleur.

Exemple 20

L'exemple 20 du Tableau C démontre l'intérêt de combiner des couches hautement sélectives qui offrent une transmission lumineuse sur verre clair standard d'environ 50% avec un verre coloré bleu selon la présente invention, pour obtenir un produit avec une transmission lumineuse d'environ 40% (ou moins), une zone de transmissions lumineuses dans laquelle peu de produits hautement sélectifs existent à l'heure actuelle et qu'il est difficile d'atteindre avec des substrats clairs ou colorés classiques, sauf à augmenter la réflexion lumineuse extérieure ou l'absorption. Ce produit obtenu selon l'invention montre quant à lui une absorption suffisamment basse pour éviter de devoir tremper le verre, une haute sélectivité et une réflexion lumineuse extérieure faible à moyenne, ce qui est fort apprécié.

Exemples 21 et exemple comparatif 21

Au Tableau D, l'exemple 21 montre que grâce à la combinaison d'un substrat en verre selon l'invention et d'une couche réfléchissant les infrarouges caractérisée par une réflexion infrarouge $RIR_C$ telle que $RIR_C > 0.97 * (1-AIR_C)$, il est possible d'atteindre des propriétés semblables à des structures déjà connues (C21), principalement en terme de transmission lumineuse, mais en évitant une réflexion lumineuse extérieure trop forte (~8% au lieu de ~31%), en diminuant le facteur solaire et en améliorant la sélectivité, tout en gardant un vitrage qui ne doit pas être trempé (absorption totale = 40).

Exemples 22 à 35 et exemples comparatifs C22 à C35

Différentes couches conformes à l'invention ont été combinées avec différents verres, dont certains, non-conformes à l'invention (notés comp-), ont une réflexion infrarouge RIRv inférieure à 1.087 fois leur transmission lumineuse TLv, et d'autres, conformes à l'invention (notés inv-), ont une réflexion infrarouge RIRv supérieure ou égale à 1.087 fois leur transmission lumineuse TLv. Les valeurs simulées de transmission lumineuse, facteur solaire, sélectivité et absorption totale, en double vitrage, sont données dans le Tableau E.
Afin de pouvoir comparer aisément les propriétés des vitrages selon les exemples 25 à 29 et les exemples comparatifs C25 à C29 à TL équivalente, l'épaisseur du substrat en verre non-conforme à l'invention revêtu de la couche a été adaptée par simulation. Cette approche est valide car les différences de TL initiales étaient minimes.
Des combinaisons selon l'invention avec les couches C, D, E seront généralement plutôt utilisées pour des applications de contrôle solaire. Le facteur solaire est légèrement augmenté ou similaire avec les verres selon l'invention, mais l'absorption totale est nettement moindre.
Des combinaisons selon l'invention avec les couches F, G seront généralement plutôt utilisées pour des applications basses-émissives. Le facteur solaire est fortement augmenté avec les verres selon l'invention, ce qui augmente l'apport d'énergie gratuite, et l'absorption totale nettement diminuée.

**Revendications**

**1.** Substrat transparent revêtu d'une couche réfléchissant les infrarouges, **caractérisé en ce que** le substrat est un verre de type silico-sodo-calcique ou aluminosilicate ou boro-silicate, dont la composition présente un rédox inférieur à 10%, **caractérisé par** une réflexion infrarouge RIRv entre 780 et 2500 nm, définie pour un substrat de verre de 4 mm d'épaisseur, telle que RIRv ≥ 1.087 * TLv, TLv étant la transmission lumineuse du verre entre 380 et 780 nm, définie pour un substrat de verre de 4 mm d'épaisseur, et **en ce que** la couche réfléchissant les infrarouges est

**caractérisée par** une transmission lumineuse TLc entre 380 et 780 nm telle que TLc $\geq$ 1.3 * TIR$_C$, TIR$_C$ étant la transmission infrarouge de la couche entre 780 et 2500 nm et **en ce que** le verre a

- 1) une composition qui comprend, en une teneur exprimée en pourcentages en poids total de verre :

| | |
|---|---|
| Fer total (exprimé sous forme de Fe$_2$O$_3$) | 0,002 - 0,06% |
| Cr$_2$O$_3$ | 0,0001 - 0,06 % ; |

OU
- 2) une composition qui comprend, en une teneur exprimée en pourcentages en poids total de verre :

| | |
|---|---|
| Fer total (exprimé sous forme de Fe$_2$O$_3$) | 0,002 - 0,06% |
| Cr$_2$O$_3$ | 0,0015 - 1 % |
| Co | 0,0001 - 1% ; |

OU
- 3) une composition qui comprend, en une teneur exprimée en pourcentages en poids total de verre :

| | |
|---|---|
| Fer total (exprimé sous forme de Fe$_2$O$_3$) | 0,02 - 1% |
| Cr$_2$O$_3$ | 0,002 - 0,5% |
| Co | 0,0001 - 0,5% ; |

OU
- 4) une composition qui comprend, en une teneur exprimée en pourcentages en poids total de verre :

| | |
|---|---|
| Fer total (exprimé sous forme de Fe$_2$O$_3$) | 0,002 - 1% |
| Cr$_2$O$_3$ | 0,0010 - 0,5% |
| Co | 0,0001 - 0,5% |
| Se | 0,0003 - 0,5% |

2. Substrat revêtu selon la revendication 1, **caractérisé en ce que** le substrat est un verre **caractérisé par** une réflexion infrarouge RIRv telle que RIRv $\geq$ 1.087 * TLv + 5.

3. Substrat revêtu selon la revendication 1 ou la revendication 2, **caractérisé par** une réflexion infrarouge RIRv telle que RIRv $\geq$ 0.510 * TLv + 53.

4. Substrat revêtu selon l'une quelconque des revendications précédentes, **caractérisé en ce que** la couche réfléchissant les infrarouges est **caractérisée par** une réflexion infrarouge RIR$_C$ de valeur comprise entre ou égale à 0.5 * (1-AIR$_C$) et 0.86 * (1-AIR$_C$), AIRc étant l'absorption infrarouge de la couche entre 780 et 2500 nm.

5. Substrat revêtu selon l'une quelconque des revendications 1 à 3, **caractérisé en ce que** la couche réfléchissant les infrarouges est **caractérisée par** une réflexion infrarouge RIR$_C$ de valeur supérieure à 0.86 * (1-AIR$_C$) et inférieure ou égale à 0.97 * (1-AIR$_C$) , AIRc étant l'absorption infrarouge de la couche entre 780 et 2500 nm.

6. Substrat revêtu selon l'une quelconque des revendications 1 à 3, **caractérisé en ce que** la couche réfléchissant les infrarouges est **caractérisée par** une réflexion infrarouge RIR$_C$ de valeur supérieure à 0.97 * (1-AIR$_C$), AIRc étant l'absorption infrarouge de la couche entre 780 et 2500 nm.

7. Substrat revêtu selon l'une quelconque des revendications précédentes, **caractérisé en ce que** la couche réfléchissant les infrarouges est un empilage multicouche comprenant n couche(s) fonctionnelle(s) à base d'un matériau réfléchissant le rayonnement infrarouge, avec n $\geq$ 1, et n+1 revêtements diélectriques de telle sorte que chaque couche fonctionnelle est entourée par des revêtements diélectriques.

8. Substrat revêtu selon l'une quelconque des revendications précédentes, **caractérisé en ce que** la ou les couche(s) fonctionnelle(s) de la couche réfléchissant les infrarouges est à base d'argent.

**Patentansprüche**

1. Transparentes Substrat, das mit einer infrarotreflektierenden Schicht beschichtet ist, **dadurch gekennzeichnet, dass** das Substrat ein Glas vom Kalk-Natron-Silikat- oder Aluminosilikat- oder Borosilikattyp ist, dessen Zusammensetzung einen Redox unter 10 % aufweist, **gekennzeichnet durch** eine für ein Glassubstrat von 4 mm Dicke definierte Infrarotreflexion $RIR_V$ zwischen 780 und 2500 nm, so dass $RIR_V \geq 1{,}087 * TL_V$, wobei $TL_V$ die für ein Glassubstrat von 4 mm Dicke definierte Lichttransmission des Glases zwischen 380 und 780 nm ist, und **dadurch, dass** die infrarotreflektierende Schicht durch eine Lichttransmission $TL_C$ zwischen 380 und 780 nm gekennzeichnet ist, so dass $TL_C \geq 1{,}3 * TIR_C$, wobei $TIR_C$ die Infrarottransmission der Schicht zwischen 780 und 2500 nm ist, und **dadurch, dass** das Glas

   - 1) eine Zusammensetzung hat, die in einem in Prozent vom Glasgesamtgewicht ausgedrückten Anteil umfasst:

   | | |
   |---|---|
   | Gesamteisen (ausgedrückt in Form von $Fe_2O_3$) | 0,002 - 0,06 % |
   | $Cr_2O_3$ | 0,0001 - 0,06 %; |

   ODER
   - 2) eine Zusammensetzung hat, die in einem in Prozent vom Glasgesamtgewicht ausgedrückten Anteil umfasst:
   Gesamteisen (ausgedrückt in Form von $Fe_2O_3$) 0,002 - 0,06 %

   | | |
   |---|---|
   | $Cr_2O_3$ | 0,0015 - 1 % |
   | Co | 0,0001 - 1 %; |

   ODER
   - 3) eine Zusammensetzung hat, die in einem in Prozent vom Glasgesamtgewicht ausgedrückten Anteil umfasst:

   | | |
   |---|---|
   | Gesamteisen (ausgedrückt in Form von $Fe_2O_3$) | 0,02 - 1 % |
   | $Cr_2O_3$ | 0,002 - 0,5 % |
   | Co | 0,0001 - 0,5 %; |

   ODER
   - 4) eine Zusammensetzung hat, die in einem in Prozent vom Glasgesamtgewicht ausgedrückten Anteil umfasst:
   Gesamteisen (ausgedrückt in Form von $Fe_2O_3$) 0,002 - 1 %

   | | |
   |---|---|
   | $Cr_2O_3$ | 0,0010 - 0,5 % |
   | Co | 0,0001 - 0,5 %. |
   | Se | 0,0003 - 0,5 %. |

2. Beschichtetes Substrat nach Anspruch 1, **dadurch gekennzeichnet, dass** das Substrat ein Glas ist, das durch eine Infrarotreflexion $RIR_V$ gekennzeichnet ist, die derart ist, dass $RIR_V \geq 1{,}087 * TL_V + 5$.

3. Beschichtetes Substrat nach Anspruch 1 oder Anspruch 2, **gekennzeichnet durch** eine Infrarotreflexion $RIR_V$, die derart ist, dass $RIR_V \geq 0{,}510 * TL_V + 53$.

4. Beschichtetes Substrat nach einem der vorhergehenden Ansprüche, **dadurch gekennzeichnet, dass** die infrarotreflektierende Schicht durch eine Infrarotreflexion $RIR_C$ mit einem Wert zwischen oder gleich $0{,}5 * (1-AIR_C)$ und $0{,}86 * (1-AIR_C)$ gekennzeichnet ist, wobei $AIR_C$ die Infrarotabsorption der Schicht zwischen 780 und 2500 nm ist.

5. Beschichtetes Substrat nach einem der Ansprüche 1 bis 3, **dadurch gekennzeichnet, dass** die infrarotreflektierende Schicht durch eine Infrarotreflexion $RIR_C$ mit einem Wert über $0{,}86 * (1-AIR_C)$ und unter oder gleich $0{,}97 * (1-AIR_C)$ gekennzeichnet ist, wobei $AIR_C$ die Infrarotabsorption der Schicht zwischen 780 und 2500 nm ist.

6. Beschichtetes Substrat nach einem der Ansprüche 1 bis 3, **dadurch gekennzeichnet, dass** die infrarotreflektierende Schicht durch eine Infrarotreflexion $RIR_C$ mit einem Wert über 0,97 * (1-$AIR_C$) gekennzeichnet ist, wobei $AIR_C$ die Infrarotabsorption der Schicht zwischen 780 und 2500 nm ist.

7. Beschichtetes Substrat nach einem der vorhergehenden Ansprüche, **dadurch gekennzeichnet, dass** die infrarotreflektierende Schicht ein mehrschichtiger Stapel ist, der n Funktionsschicht (en) auf Basis eines die Infrarotstrahlung reflektierenden Materials, mit n ≥ 1, und n+1 dielektrische Überzüge derart umfasst, dass jede Funktionsschicht von dielektrischen Überzügen umgeben ist.

8. Beschichtetes Substrat nach einem der vorhergehenden Ansprüche, **dadurch gekennzeichnet, dass** die Funktionsschicht(en) der infrarotreflektierenden Schicht auf Basis von Silber ist(sind).

**Claims**

1. Transparent substrate coated with an infrared-reflecting layer, **characterized in that** the substrate is a soda-lime-silicate or aluminosilicate or borosilicate glass the composition of which has a redox lower than 10%, **characterized by** an infrared reflection $RIR_V$ between 780 and 2500 nm, defined for a glass substrate of 4 mm thickness, such that $RIR_V \geq 1.087 * TL_V$, $TL_V$ being the light transmission of the glass between 380 and 780 nm, defined for a glass substrate of 4 mm thickness, and **in that** the infrared-reflecting layer is **characterized by** a light transmission $TL_C$ between 380 and 780 nm such that $TL_C \geq 1.3 * TIR_C$, $TIR_C$ being the infrared transmission of the layer between 780 and 2500 nm, and **in that** the glass has

   - 1) a composition that comprises, in a content expressed in percentages by total weight of glass:

   | | |
   |---|---|
   | Total iron (expressed in the form of $Fe_2O_3$) | 0.002 - 0.06% |
   | $Cr_2O_3$ | 0.0001 - 0.06%; |

   OR
   - 2) a composition that comprises, in a content expressed in percentages by total weight of glass:

   | | |
   |---|---|
   | Total iron (expressed in the form of $Fe_2O_3$) | 0.002 - 0.06% |
   | $Cr_2O_3$ | 0.0015 - 1% |
   | Co | 0.0001 - 1%; |

   OR
   - 3) a composition that comprises, in a content expressed in percentages by total weight of glass:

   | | |
   |---|---|
   | Total iron (expressed in the form of $Fe_2O_3$) | 0.02 - 1% |
   | $Cr_2O_3$ | 0.002 - 0.5% |
   | Co | 0.0001 - 0.5%; |

   OR
   - 4) a composition that comprises, in a content expressed in percentages by total weight of glass:

   | | |
   |---|---|
   | Total iron (expressed in the form of $Fe_2O_3$) | 0.002 - 1% |
   | $Cr_2O_3$ | 0.0010 - 0.5% |
   | Co | 0.0001 - 0.5% |
   | Se | 0.0003 - 0.5%. |

2. Coated substrate according to Claim 1, **characterized in that** the substrate is a glass **characterized by** an infrared reflection $RIR_V$ such that $RIR_V \geq 1.087 * TL_V + 5$.

3. Coated substrate according to Claim 1 or Claim 2, **characterized by** an infrared reflection $RIR_V$ such that $RIR_V \geq$

0.510 * $TL_V$ + 53.

4. Coated substrate according to any one of the preceding claims, **characterized in that** the infrared-reflecting layer is **characterized by** an infrared reflection $RIR_C$ of value comprised between or equal to 0.5 * (1-$AIR_C$) and 0.86 * (1-$AIR_C$), $AIR_c$ being the infrared absorption of the layer between 780 and 2500 nm.

5. Coated substrate according to any one of Claims 1 to 3, **characterized in that** the infrared-reflecting layer is **characterized by** an infrared reflection $RIR_C$ of value higher than 0.86 * (1-$AIR_C$) and lower than or equal to 0.97 * (1-$AIR_C$), $AIR_c$ being the infrared absorption of the layer between 780 and 2500 nm.

6. Coated substrate according to any one of Claims 1 to 3, **characterized in that** the infrared-reflecting layer is **characterized by** an infrared reflection $RIR_C$ of value higher than 0.97 * (1-$AIR_C$), $AIR_c$ being the infrared absorption of the layer between 780 and 2500 nm.

7. Coated substrate according to any one of the preceding claims, **characterized in that** the infrared-reflecting layer is a multilayer stack comprising n functional layers based on an infrared-reflecting material, with n ≥ 1, and n+1 dielectric coatings such that each functional layer is flanked by dielectric coatings.

8. Coated substrate according to any one of the preceding claims, **characterized in that** the one or more functional layers of the infrared-reflecting layer are silver-based.

**EP 3 310 727 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014128016 A1
- WO 2014180679 A1
- WO 2015011040 A1
- WO 2015011041 A1
- WO 2015011042 A1
- WO 2015011043 A1
- WO 2015011044 A1
- EP 15172779
- EP 13193345 A
- EP 14167942 A
- EP 14177487 A